# EUROPÄISCHE PATENTSCHRIFT

(11) **EP 0 535 563 B1**
(45) Veröffentlichungstag und Bekanntmachung des Hinweises auf die Patenterteilung: **01.05.1996**
(21) Anmeldenummer: 92116507.2
(22) Anmeldetag: 26.09.1992
(51) Int. Cl.: B23D 61/12, B23D 59/00, B23Q 17/09

(54) **Sägeblatt**
Saw blade
Lame de scie

(30) Priorität: 30.09.1991 DE 4132454
(43) Veröffentlichungstag der Anmeldung: 07.04.1993
(73) Patentinhaber: ROBERT BOSCH GMBH, D-70442 Stuttgart (DE)
(72) Erfinder: Wünsch, Steffen, Dipl.-Ing., W-7038 Holzgerlingen (DE)

(56) Entgegenhaltungen:
- WO-A-90/05607
- DE-A- 2 906 892
- GB-A- 1 604 990
- US-A- 2 928 791
- US-A- 3 810 408
- US-A- 5 000 036
- DATABASE WPIL Derwent Publications Ltd., London, GB; AN 84-129501 & JP-A-58 217 476 (SUMITOMO ELEC IND KK) 17. Dezember 1983
- PATENT ABSTRACTS OF JAPAN vol. 012, no. 429 (P-785)14. November 1988 & JP-A-63 163 233 ( MATSUMOTO KOSAN KK ) 6. Juli 1988
- PATENT ABSTRACTS OF JAPAN vol. 013, no. 032 (P-817)25. Januar 1989 & JP-A-63 231 231 ( NISSAN MOTOR CO LTD ) 27.September1988

## Beschreibung

Die Erfindung geht aus von einem Sägeblatt gemäß Oberbegriff von Patentanspruch 1, wie es insbesondere für Stichsägen gebräuchlich ist; siehe EP-A 0 242 519. Derartige Sägeblätter sind länglich und weisen einen Schneidenteil mit Zähnen sowie einen Schaftteil auf, der in einer Werkzeugaufnahme befestigt wird. Die Sägeblätter erhitzen sich beim Gebrauch durch die Reibung insbesondere des Schneidenteils an dem zu bearbeitenden Werkstück. Bei zu schnellem Vorschub der Handwerkzeugmaschine bzw. dem Werkstück unangepaßtem Sägeblatt ist die Erhitzung so stark, daß sich das Sägeblatt verbiegt, was zu einem schiefen und unsauberen Schnittverlauf führt. Gleichzeitig stumpfen die Schneiden des Sägeblatts ab, was eine erhebliche Verschlechterung der Schnittleistung zur Folge hat. Weiter kann es insbesondere bei der Bearbeitung von Holz zum Verbrennen des Werkstücks kommen sowie zu einem vermehrten Ausreißen der Schnittkante. Dies alles ist Folge einer zu starken, in der Regel unbemerkten Erwärmung des Sägeblatts.

### Vorteile der Erfindung

Das erfindungsgemäße Sägeblatt mit den kennzeichnenden Merkmalen des Anspruchs 1 hat demgegenüber den Vorteil, daß eine Überhitzung des Sägeblatts dem Benutzer optisch eindeutig angezeigt wird. Damit kann ein rascher Verschleiß des Sägeblatts mit den geschilderten negativen Auswirkungen auf den Schnitt vermieden werden. Außerdem erkennt der Benutzer schneller den versehentlich falschen Einsatz eines ungeeigneten Sägeblatts.

Durch die in den abhängigen Ansprüchen aufgeführten Maßnahmen sind vorteilhafte Weiterbildungen und Verbesserungen des im Anspruch 1 angegebenen Sägeblatts möglich. Besonders vorteilhaft ist es, wenn der Temperaturmeßindikator die Temperatur des Sägeblatts durch Verfärbung anzeigt. Der oder die Temperaturmeßindikatoren können auf verschiedene Weise am Trägerteil des Sägeblatts angebracht sein, z. B. aufgedruckt, aufgeklebt oder als Etikett aufgebracht sein. Von besonderem Vorteil ist es, wenn mehrere Temperaturmeßindikatoren nebeneinander für die Anzeige verschiedener Temperaturen angebracht sind. Der Benutzer der Handwerkzeugmaschine kann dann bei Beobachtung der Meßindikatoren jeweils an der Verschleißgrenztemperatur arbeiten, ohne unnötig vorsichtig sägen zu müssen und ohne die Grenztemperatur versehentlich zu überschreiten.

### Zeichnung

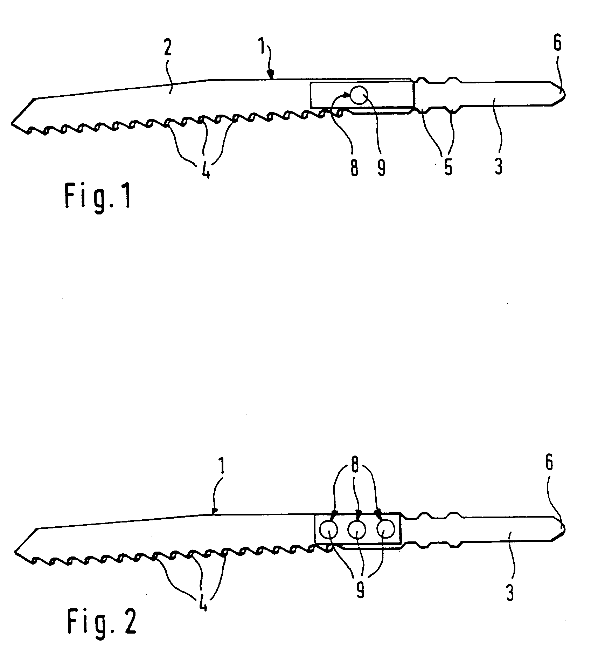

Zwei Ausführungsbeispiele der Erfindung sind in der Zeichnung dargestellt und in der nachfolgenden Beschreibung näher erläutert. Figur 1 zeigt ein erstes und Figur 2 ein zweites Ausführungsbeispiel.

### Beschreibung der Ausführungsbeispiele

Ein längliches Sägeblatt 1 besteht aus einem Schneidenteil 2 und einem Schaftteil 3. Die beiden Teile gehen übergangslos ineinander über. Der Schneidenteil 2 trägt einseitig Sägezähne 4 oder andere zur Bearbeitung eines Werkstücks geeignete Schneiden wie Hartmetall- oder Diamantkörner, Feilenhiebe oder ähnliches.

Der Schaftteil 3 dient der Einspannung des Sägeblatts in eine entsprechende Halterung und weist zu diesem Zweck vorzugsweise Vorsprünge 5 und ein zugespitztes Ende 6 auf. Der Schaftteil 3 kann jedoch auch in beliebiger anderer Weise zweckmäßig geformt sein.

Seitlich auf dem während des Sägens sichtbaren Schaftteil 3 ist ein Temperaturmeßindikator 8 mit einer Anzeigefläche 9 angeordnet. Derartige Indikatoren 8 enthalten beispielsweise ein wasserabscheidendes Wachs und die Anzeigefläche 9 verfärbt sich je nach Auslegung in einem bestimmten engen Temperaturbereich von wenigen Grad deutlich und irreversibel. Das heißt Meßfühler und Indikator des Temperaturmeßindikators 8 sind in einer dünnen Schicht aus Wachs vereint, die kaum aufträgt. Vorteilhafterweise werden solche Indikatoren 8 gewählt, deren bei Erhitzung angenommene Farbe sich von der Grundfarbe des Sägeblattes 1 deutlich unterscheidet. So fällt es beispielsweise besonders ins Auge, wenn bei einem gelben Sägeblatt die Grundfarbe des Indikators 8 bei niedriger Temperatur ebenfalls gelb ist und er sich bei Erreichen einer Temperatur von beispielsweise 260° oder 300° C rot verfärbt. Ein Sägeblatt 1 mit verfärbtem Indikator 8 soll nicht weiter benutzt werden, da sein Schneidenteil 2 infolge Überhitzung über die Verschleißgrenztemperatur hinaus seine Härte verloren hat. Die Temperatur, bei der die Farbe des Indikators 8 umschlägt, ist ausreichend niedrig so zu wählen, daß nicht an den Zähnen 4 des Schneidenteils 2 örtlich Temperaturen auftreten, die oberhalb der Erweichungstemperatur des gehärteten Sägeblatt-Werkstoffs liegen.

Als Temperaturmeßindikator 8 können außer wachshaltigen auch andere dünnschichtige Indikatoren Verwendung finden. Diese können als Etikett auf dem Sägeblatt aufgeklebt sein. Sie können jedoch auch direkt auf das Sägeblatt aufgedruckt oder wie ein Farbauftrag auf das Sägeblatt aufgebracht werden.

Im zweiten Ausführungsbeispiel nach Figur 2 sind auf ein Sägeblatt 1 nebeneinander 3 Temperaturindikatoren 8 aufgebracht. Die Anzeigeflächen 9 der Indikatoren verfärben sich bei unterschiedlichen Temperaturen, beispielsweise bei 200°, 250° und 300° C. Ein solches Sägeblatt kann der Anwender beispielsweise bis zu einer Verfärbung des ersten Indikators das Sägeblatt ohne Einschränkung benutzen. Sobald sich der zweite Indikator 8 verfärbt, zeigt dies an, daß das Sägeblatt 1 abgekühlt werden soll. Dadurch kann eine Verfärbung des dritten Indikators 8, d. h. eine Erhitzung des Sägeblatts über die Verschleißgrenztemperatur hinaus vermieden werden.

Als Indikatoren sind beispielsweise auch Farbwechselkreiden mit definiertem Farbumschlag anwendbar. Bei geeigneter Wahl der Farben der Meßindikatoren kann auch erreicht werden, daß eine Verfärbung selbst bei einem sich schnell hin und her bewegenden Sägeblatt erkannt wird. Ggf. ist die Größe der Anzeigeflächen 9 so zu wählen, daß die Verfärbung dem Anwender ausreichend deutlich ins Auge fällt.

Es ist auch denkbar, mindestens einen Meßindikator 8 an anderen Stellen des Schaftes, wie z.B. an seinem freien Ende oder sogar am Rücken des Schneidenteils anzubringen. Damit können überhitzte Sägeblätter vor einem nochmaligen Einsetzen in eine Säge als unbrauchbar erkannt werden.

## Patentansprüche

1. Sägeblatt für Handwerkzeugmaschinen, insbesondere für Stichsägen, mit einem Schneidenteil (2) und einem einspannbaren Schaftteil (3), dadurch gekennzeichnet, daß zur Verschleißanzeige am Schaftteil (3) ein Temperaturmeßindikator (8) angebracht ist, der durch Verfärben seiner Anzeigefläche (9) die Temperatur des Sägeblatts (1) anzeigt, wobei der Temperaturmeßindikatur (8) an einer Stelle auf das Schaftteil (3) aufgebracht ist, die während des Sägevorgangs weder ständig ins Werkstück eintaucht, noch im Werkzeughalter der Handwerkzeugmaschine verschwindet und daß das Schaftteil (3) bei niedriger Temperatur die gleiche Grundfarbe wie der Temperaturmeßindikator (8) hat, insbesondere gelb, wobei der Temperaturmeßindikator bei einer Temperatur von 250° bis 300° C eine sich von der Grundfarbe deutlich unterscheidende Farbe, insbesondere rot, annimmt.

2. Sägeblatt nach Anspruch 1, dadurch gekennzeichnet, daß der Temperaturmeßindikator (8) als Etikett aufgebracht ist.

3. Sägeblatt nach einem der vorhergehenden Ansprüche, dadurch gekennzeichnet, daß der Temperaturmeßindikator (8) direkt auf das Schaftteil (3), insbesondere als Farbauftrag, aufgedruckt ist.

4. Sägeblatt nach Anspruch 1 oder 2, dadurch gekennzeichnet, daß der Temperaturmeßindikator (8) auf das Schaftteil (3) aufgeklebt ist.

5. Sägeblatt nach einem der vorhergehenden Ansprüche, dadurch gekennzeichnet, daß mehrere Temperaturmeßindikatoren (8) zur Anzeige verschiedener Temperaturen angebracht sind.

6. Sägeblatt nach einem der vorhergehenden Ansprüche, dadurch gekennzeichnet, daß die Temperatur, bei der die Farbe der Temperaturmeßindikatoren (8) am Schaftteil (3) umschlägt, so niedrig ist, daß bei niedrigen Temperaturen des Schaftteils (3) die Verschleißgrenztemperatur an den Sägezähnen (4) nicht schon örtlich überschritten wird.

7. Sägeblatt nach einem der vorhergehenden Ansprüche, dadurch gekennzeichnet, daß die Farbe der Temperaturmeßindikatoren (8) bei Erreichen einer vorbestimmten Temperatur dauerhaft und irreversibel umschlägt.

8. Sägeblatt nach einem der vorhergehenden Ansprüche, dadurch gekennzeichnet, daß die Temperaturmeßindikatoren (8) ein wasserabscheidendes Wachs enthalten.

## Claims

1. Saw blade for hand-operated machine tools, especially for compass saws, with a cutter part (2) and a clampable shank part (3), characterized in that a temperature-measuring indicator (8) is attached to the shank part (3) for the purpose of indicating wear, which indicator indicates the temperature of the saw blade (1) as a result of the discoloration of its indicating surface (9), the temperature-measuring indicator (8) being attached to the shank part (3) at a point which, during the sawing operation, neither penetrates constantly into the workpiece nor disappears in the tool-holder of the hand-operated machine tool, and in that at a low temperature the shank part (3) has the same basic colour as the temperature-measuring indicator (8), especially yellow, the temperature-measuring indicator taking on a clearly different colour to the basic colour, especially red, at a temperature of 250° to 300°C.

2. Saw blade according to Claim 1, characterized in that the temperature-measuring indicator (8) is affixed as a label.

3. Saw blade according to one of the preceding claims, characterized in that the temperature-measuring indicator (8) is printed directly onto the shank part (3), especially as a paint coating.

4. Saw blade according to Claim 1 or 2, characterized in that the temperature-measuring indicator (8) is glued to the shank part (3).

5. Saw blade according to one of the preceding claims, characterized in that a plurality of temperature-measuring indicators (8) for indicating different temperatures are attached.

6. Saw blade according to one of the preceding claims, characterized in that the temperature at which the colour of the temperature-measuring indicators (8) on the shank part (3) changes is so low that, at lower temperatures of the shank part (3) the wear-limit temperature on the saw teeth (4) is not already exceeded locally.

7. Saw blade according to one of the preceding claims, characterized in that the colour of the temperature-measuring indicators (8) changes permanently and irreversibly when a predetermined temperature is reached.

8. Saw blade according to one of the preceding claims, characterized in that the temperature-measuring indicators (8) contain a water-separating wax.

## Revendications

1. Lame de scie pour outillage à main motorisé, en particulier pour scies sauteuses, comportant une partie coupante (2) et une tige (3) de montage par serrage, caractérisée en ce que :
- sur la tige (3) est placé un indicateur thermométrique (8) destiné à signaler l'usure et qui, par changement de couleur de sa surface indicatrice (9), donne la température de la lame de scie (1),
- l'indicateur (8) est placé sur la tige (3) à un endroit qui, pendant le sciage, ne se trouve ni plongé en permanence dans la pièce, ni enfoui dans le porte-lame de la machine,
- la tige (3), à basse température, à la même couleur de base que l'indicateur thermométrique (8), jaune en particulier, cet indicateur prenant à une température de 250° à 300°, une température se différenciant nettement de la température de base en devenant rouge notamment.

2. Lame de scie selon la revendication 1, caractérisée en ce que l'indicateur thermométrique (8) est placé sous forme d'étiquette.

3. Lame de scie selon l'une des revendications précédentes, caractérisée en ce que l'indicateur thermométrique (8) est déposé directement sur la tige (3), notamment sous la forme d'une couche colorée.

4. Lame de scie selon la revendication 1 ou 2, caractérisée en ce que l'indicateur thermométrique (8) est collé sur la tige (3).

5. Lame de scie selon l'une des revendications précédentes, caractérisée en ce qu'elle porte plusieurs indicateurs (8) indiquant des températures différentes.

6. Lame de scie selon l'une des revendications précédentes, caractérisée en ce que la température à laquelle se produit le changement de couleur des indicateurs (8) sur la tige (3) est suffisamment faible pour qu'aux basses températures de la tige (3), la température limite d'usure des dents de la partie coupante (4) ne soit pas déjà dépassée localement.

7. Lame de scie selon l'une des revendications précédentes, caractérisée en ce que la couleur de chacun des indicateurs thermométriques (8) change durablement et irréversiblement à une température donnée.

8. Lame de scie selon l'une des revendications précédentes, caractérisée en ce que les indicateurs thermométriques (8) contiennent une cire précipitant à l'eau.
